# EUROPÄISCHE PATENTSCHRIFT

(11) **EP 2 127 159 B1**
(45) Veröffentlichungstag und Bekanntmachung des Hinweises auf die Patenterteilung: **28.11.2018**
(21) Anmeldenummer: 08706359.0
(22) Anmeldetag: 14.02.2008
(51) Int. Cl.: H04B 13/00, G07C 9/00

(54) **SYSTEM UND PORTABLES GERÄT FÜR DIE ÜBERTRAGUNG VON IDENTIFIKATIONSSIGNALEN**
SYSTEM AND PORTABLE DEVICE FOR TRANSMITTING IDENTIFICATION SIGNALS
SYSTÈME ET APPAREIL PORTABLE CONÇU POUR TRANSMETTRE DES SIGNAUX D'IDENTIFICATION

(30) Priorität: 14.02.2007 CH 240072007
(43) Veröffentlichungstag der Anmeldung: 02.12.2009
(73) Patentinhaber: dormakaba Schweiz AG, 8620 Wetzikon (CH)
(72) Erfinder: STUCKI, Andreas, CH-8624 Grüt (CH); HÄBERLI, Andreas, CH-8608 Bubikon (CH)
(74) Vertreter: Balder IP Law, S.L.
(86) Internationale Anmeldenummer: PCT/CH2008/000059
(87) Internationale Veröffentlichungsnummer: WO 2008/098399

(56) Entgegenhaltungen:
- EP-A- 1 168 678
- US-A1- 2004 015 058

## Beschreibung

Die Erfindung betrifft die Kommunikation zwischen einem Sender (Transmitter) und einem Empfänger über die kapazitive Kopplung (manchmal auch als kapazitiv-resisitive Kopplung, "intrabody"-Kopplung oder PAN-Kopplung bezeichnet) bei welcher im menschlichen Körper kleine Ströme erzeugt werden, die zur Informationsübertragung zwischen dem Transmitter und dem Empfänger benutzt werden, und/der bei welchem der Transmitter und der Empfänger über sehr kurze Distanzen via elektrische Felder miteinander wechselwirken.

Diese Art der Kopplung ist in den US-Patentschriften 4,591,854, 5,914,701 und 5,796,827 offenbart. Anwendungen davon sind in der internationalen Patentanmeldung PCT/CH 2006/000518 sowie in veröffentlichten Schriften verschiedener Inhaber beschrieben.

EP 1 168 678 A1 zeigt ein intrabody-Datenübertragungssystem mit einem ersten Gerät, welches am Körper eines Benutzers getragen wird und zwei koplanare Elektroden aufweist, die beispielsweise auf der Hinterseite einer Armbanduhr angeordnet sind. Durch Anlegen respektive Messen von Spannungen zwischen den Elektroden kann mit einem zweiten Gerät, welches der Benutzer an einer einzelnen Elektrode berührt, kommuniziert werden.

Besonders vorteilhaft an der kapazitiven Kopplung durch den menschlichen Körper bzw. über kurze Distanzen ist die Selektivität der Datenübertragung. Je nach Konstellation kann man mit recht hoher Sicherheit bestimmen, dass das vom Empfänger empfangene Signal nur durch diejenige Person übertragen worden sein kann, die sich in unmittelbarer Nähe oder in physischem Kontakt zu einer dafür vorgesehenen Empfängerelektrode befindet.

Nachteilig ist unter anderem, dass aufgrund des schlechten Signal-Rauschverhältnisses (eigentlich: Signal-Interferenzverhältnisses) nur eine beschränkte Datenmenge übertragen werden kann. Ein gutes Signal-Rauschverhältnis ist nur bei einer grossen Amplitude des Übertragungssignals möglich. Eine grosse Amplitude (d.h. hohe Spannung) wird aber vom Benutzer eher nicht toleriert. In der internationalen Patentveröffentlichung WO 2007/112609 werden Lösungsansätze aufgezeigt, mit denen dieses Problem angegangen werden kann. Trotzdem bleibt die Bandbreite der Signalübertragung beschränkt.

Es bestehen viele Anwendungsmöglichkeiten für die kapazitiv-resisitive Datenübertragung, bekannte Realisierungen sind jedoch auf spezielle Anwendungsfälle zugeschnitten. Für neue Anwendungsfälle muss auch eine neue angepasste Hardware entwickelt werden, welche den spezifischen Anforderungen entsprechend den jeweiligen zu übertragenden Signale und den physischen Umständen angepasst sind. Dieser Zustand ist unbefriedigend.

Vor diesem Hintergrund ist es Aufgabe der Erfindung, Lösungen für die kapazitiv-resisitive Datenübertragung zur Verfügung zu stellen, die obige Nachteile mindestens zum Teil beheben und die einen weiteren Schritt zur kommerziellen Anwendung der Technologie und deren Akzeptanz durch die Konsumenten bedeuten. Die genannten Lösungen sollten insbesondere bei der Zutrittskontrolle verwertbar sein.

Diese Aufgabe wird durch die Erfindung gelöst, wie sie in den Patentansprüchen definiert ist.

Ein portables Gerät gemäss dem erfindungsgemässen Ansatz ist durch einen Benutzer bspw. auf dem Körper tragbar, es kann als kartenartiges Identifikationsmedium, als "Smart Card Cover", Mobiltelefon, Uhr, portabler Computer (bspw. vom Typ "Handheld"-Computer etc. ausgebildet sein. Es weist mindestens zwei Elektroden und Mittel zum Anlegen eines elektrischen Signals zwischen den Elektroden auf, so, dass das Signal durch die Elektroden in den Körper des Benutzers einkoppelbar und vom Körper durch mindestens eine Elektrode des zweiten Geräts detektierbar ist. Ein solches Gerät ermöglicht auch eine direkte, kurzreichweitige Kommunikation (nicht durch den Körper), bspw. durch Halten des portablen Geräts in die unmittelbare Nähe einer Empfängerelektrode, d.h. Anwendungen der Erfindung sind nicht auf die Kopplung durch den menschlichen Körper beschränkt sondern erstrecken sich auch auf Fälle, in denen der Benutzer das portable Gerät vor sich trägt, in die Nähe einer Receiverelektrode hält oder sonstwie ermöglicht, dass die Kommunikation direkt und nicht ausschliesslich über den Körper zwischen Transmitter und Receiver erfolgt.

Dabei sind gemäss einem Aspekt der Erfindung die genannten Mittel zum Anlegen des elektrischen Signals zwischen den Elektroden Teil einer Transmitterelektronik, wobei die Transmitterelektronik zudem Mittel zum Erzeugen des elektrischen Signals in Abhängigkeit von vorgegebenen Daten aufweist, und die Transmitterelektronik als anwendungsspezifischer Integrierter Schaltkreis (ASIC) ausgeführt ist.

Die Transmitterelektronik respektive der ASIC weist also sowohl Mittel zum Erzeugen des elektrischen Signals in Abhängigkeit von vorgegebenen Daten als auch Mittel zum Anlegen des elektrischen Signals zwischen den Elektroden auf. Die Mittel zum Erzeugen des elektrischen Signals in Abhängigkeit von vorgegebenen Daten sind typischerweise digitale Schaltkreise zum Codieren der vorgegeben, zu übertragenden Daten und zum Modulieren der so codierten Daten. Die Mittel zum Anlegen des elektrischen Signals zwischen den Elektroden sind Leistungs- oder Verstärkerschaltkreise, welche die erforderliche Leistung zum Treiben der Elektroden aufbringen. Indem sowohl die digitalen Verarbeitungselemente als auch die Treiber auf einem einzigen Integrierten Schaltkreis vorliegen, wird ein flexibler und effizient einsetzbares Bauteil geschaffen.

Ausserdem hat sie die Ausführung der Transmitterelektronik mit ASIC als vorteilhaft in Bezug auf eine Reduktion des Stromverbrauchs erwiesen. Insbesondere muss der ASIC für die kapazitiv-resistive Kopplung mit dem hier beschriebenen Verfahren im Gegensatz zu einem nicht anwendugnsspezifischen, am Markt erhältlichen Mikroprozessor keine hochfrequenten Oszillatoren aufweisen, da sämtliche Signale niederfrequent sind. Auch fällt die Abfrage von nicht benutzten Eingängen, die ebenfalls zu einem Hintergrund-Stromverbrauch von Mikroprozessoren beiträgt, weg. Durch den erfindungsgemässen Ansatz kann, insbesondere in Kombination mit einer tieffrequenten Übertragung (Mittenfrequenz kleiner als 2 MHz) und Ultra-breitband-Signalübertragung der Hintergrund-Stromverbrauch um einen Faktor 100 bis 1000 im Vergleich zum Stand der Technik reduziert werden.

Die vorgegebenen und zu übertragenden Daten sind in einer weiteren bevorzugten Ausführungsform der Erfindung in der Transmitterelektronik selber gespeichert bzw. speicherbar. Zu diesem Zweck enthält das portable Gerät einen Datenspeicher, beispielsweise in einem im ASIC enthaltenen flüchtigen, oder vorzugsweise nichtflüchtigen Speicher wie einem EEPROM. Damit kann die Transmitterelektronik ohne weitere Bauteile (nebst Batterie und Elektroden) zum Aussenden von Identifikationssignalen eingesetzt werden. So kann die Transmitterelektronik in Schlüsssel, Smartcards, Kartenträger etc. von Zutrittskontrollsystemen integriert werden. Die zu übertragenden Daten entsprechen also einem Code oder Schlüssel. Für Anwendungen, in welchen der Code nicht geändert zu werden braucht, kann er auch in einem nicht überschreibbaren Speicher abgelegt sein.

In einer anderen bevorzugten Ausführungsform der Erfindung ist weist die Transmitterelektronik eine Schnittstelle zur Kommunikation mit einer weiteren Einheit (oder Applikation) auf, welche im portablen Gerät eingebaut sind oder durch die Schnittstelle mit dem portablen Gerät kommunizieren. Über eine entsprechende Kommunikationsschnittstelle, insbesondere einen I²C-Bus, sind zu übertragende Daten von der anderen Applikation an die Transmitterelektronik übermittelbar. Die Transmitterelektronik ist dabei dazu ausgelegt, diese Daten oder aus diesen Daten gewonnene Übertragungsdaten zu modulieren, codieren und auszusenden. Das portable Gerät dient dabei vorzugsweise unter anderem als Eingabeeinheit für die Transmitterelektronik.

Das portable Gerät kann ein bspw. kartenförmig ausgebildetes Identifikationsmedium, ein "Smart Card Cover"-artiges Identifikationsmedium oder ein Identifikationsmedium in sonst einer Form sein, bspw. in der Form eines Schlüsselanhängers. Es kann alternativ dazu ein 'intelligenteres' Gerät mit anderen Fuktionalitäten sein, beispielsweise ein Mobiltelefon oder ein anderes "handheld" Gerät wie ein PDA (personal digital assistant, oder eine Uhr etc. Moderne elektronische Geräte haben oft grossflächige Displays. Eine erste der beiden Sender-(und/oder Empfänger-) Elektroden kann im oder über dem Display angeordnet sein. Das hat den Vorteil einer reduzierten Kapazität, wenn die zweite - transparente oder nicht transparente - Elektrode bspw. in der Nähe einer Rückseite des Geräts angeordnet ist.

Es sind auch Kombinationen der beiden bevorzugten Ausführungsformen denkbar, d.h. das Vorhandensein sowohl eines bspw. nichtflüchtigen Speichers als auch das Vorhandensein einer Schnittstelle zur Kommunikation mit einem bspw. portablen Gerät.

Vorzugsweise sind Parameter der Codierung entsprechend den Anforderungen an die Kommunikationssicherheit und -Geschwindigkeit anpassbar. Ferner ist die Treiberschaltung der Transmitterelektronik ebenfalls parametrierbar, so dass sie an verschiedene Kategorien von Elektroden anpassbar ist. Auch die Signalbandbreite und die Mittenfrequenz (Carrierfrequenz) sind potentiell parametrierbar, um in stark verrauschter Umgebung das Optimum bezüglich robuster Datenübertragung zu erreichen.

Durch die Bereitstellung der Transmitterelektronik als Integrierten Schaltkreis mit der vorgenannten Funktionalität und Parametrierbarkeit wird ein breit einsetzbares Element geschaffen. Dieses kann einerseits "stand-alone" mit einer Batterie, den Elektroden und einer mehr oder weniger komplexen - der Verwendung entsprechend angepassten - Beschaltung versehen eingesetzt werden. Dabei sind die zu übertragenden Daten in der Transmitterelektronik selber (nichtflüchtig) gespeichert. Andererseits kann die Transmitterelektronik als Teil des portablem Gerätes mit mindestens einer anderen Applikation, oder in zumindest zeitweiser Verbindung mit einer anderen Applikation stehend, von diesem portablen Gerät über die Kommunikationsschnittstelle mit zu sendenden Daten versorgt und vorzugsweise auch sonst angesteuert werden.

Gemäss einer bevorzugten Ausführungsform der Erfindung sind zwei Elektroden eines portablen Geräts (Transmitters) so angeordnet, dass zwischen den Elektroden entweder Bauteile einer von der Transmitterelektronik verschiedenen Applikation angeordnet sind oder ein Luftspalt vorhanden ist, in den ein solches Bauteil - bspw. mit einer "Smart Card" als Träger des Bauteils - eingeschoben werden kann.

Natürlich können die Transmitterelektronik und elektronische Bauteile der von der Transmitterelektronik verschiedenen Applikation miteinander in mindestens einer gemeinsamen Komponente - bspw. einer integrierten Schaltung - integriert sein. Das erfindungsgemässe Merkmal der "Bauteile einer von der Transmitterelektronik verschiedenen Applikation" besagt lediglich, dass zwischen den Elektroden angeordnete elektronische Elemente Funktionen wahrnehmen können, die von der kapazitiv-resistiven-Informationsübertragung und vorzugsweise auch von anderen, berührungslosen Informationsübertragungsarten gänzlich verschieden sind, bspw. indem sie den Display eines Mobiltelefons steuern, oder bilden, indem sie Informationen speichern und/oder gespeichert haben, die nicht mit der kapazitiv-resistiven Informationsübertragung übermittelt werden etc.

Gemäss einer speziellen Ausführungsform kann das portable Gerät mit dem Luftspalt ein Kommunikationsinterface aufweisen, über welches Daten mit der Applikation ausgetauscht werden können, die in den Luftspalt einschiebbar ist. Ein solches Interface kann bspw. wie ein an sich konventioneller Smart-Cart-Reader ausgebildet sein.

Gemäss anderen speziellen Ausführungsform kann eine Kommunikationsverbindung zwischen der Transmitterelektronik und einer Eingabeeinheit bestehen, wobei dann die von der Transmitterlelektronik übermittelten Signale von eingegebenen Daten abhängig sein können. Bspw. können die übermittelten Signale einen PIN beinhalten, welchen der Benutzer vorgängig in die Eingabeeinheit eingegeben hat. In dieser Ausführungsform kann das portable Gerät bspw. als Mobiltelefon ausgebildet sein, wobei die Eingabeeinheit der Eingabeeinheit des Mobiltelefons (Tastatur, Touchscreen, Stimmerkennungseinrichtung etc.) entsprechen kann.

Indem das portable Gerät ein Mobiltelefon ist, kann auch die Stromversorgung der Transmitterelektronik auf einfache Weise gelöst sein: nämlich indem die Transmitterelektronik durch die sehr leistungsfähige Batterie des Mobiltelefons gespeist wird, bspw. über eine 3V-DC-Versorgung. Die Kommunikation zwischen der Transmitterelektronik und den übrigen elektronischen Bauteilen des Mobiltelefons kann - sofern diese nicht miteinander integriert sind - über irgend eine bekannte oder noch zu entwickelnde Schnittstelle erfolgen, bspw. über einen I²C-Datenbus.

Gemäss einem weiteren Aspekt der Erfindung beinhaltet eine Transmitterelektronik, mit der die mindestens zwei Elektroden des Transmitters angesteuert werden, eine Charge Recovery-Logik und/oder eine adiabatic switching-logik. Die Charge Recovery-Logik kann bspw. auf "synchronous rectification" basieren.

Charge Recovery-Logiken sind für Kapazitäten in integrierten Schaltungen bekannt, bspw. in langsamen CMOS- oder anderen integrierten Schaltungen.

Nun hat sich gezeigt, dass eine solche Charge-Recovery-Logik besonders vorteilhaft bei der Ansteuerung von - im Allgemeinen nicht in der Ansteuerelektronik integrierten - Elektroden eines erfindungsgemässen portablen Geräts ist. Diesem neuen Ansatz liegt die Erkenntnis zu Grunde, dass bei den verhältnismässig tiefen Frequenzen, die für die Intrabody-Kommunikation benötigt werden, eine Ansteuerung der Elektroden mittels eines Charge-Recovery-Systems in Betracht kommt und vorteilhaft ist. Es lässt sich eine markante Einsparung beim Stromverbrauch und folglich eine deutlich verlängerte Lebensdauer der Batterie im (autonomen, d.h. nicht mit einer externen Spannungsquelle verbundenen) portablen Gerät realisieren.

Nachfolgend wird der Stromverbrauch eines portablen Geräts für die Übertragung von Signalen an ein zweites Gerät, wobei das portable Gerät durch einen Benutzer auf dem Körper tragbar ist, aufweisend mindestens zwei Elektroden und eine Transmitterelektronik zum Anlegen eines elektrischen Signals zwischen den Elektroden, so, dass das Signal durch die Elektroden in den Körper des Benutzers einkoppelbar und vom Körper durch mindestens eine Elektrode des zweiten Geräts detektierbar ist, noch anhand weiterer Aspekte eingehender diskutiert. Es wird jeweils angenommen, dass die Transmitterelektronik durch eine Batterie (wiederaufladbar öder nicht wiederaufladbar) angesteuert wird.

Folgende Aspekte der Erfindung können weiter zu einem reduzierten Stromverbrauch beitragen. Jeder der Aspekte kann für sich allein, in Kombination mit beliebigen der anderen Aspekte, oder in Kombination mit beliebigen der vorstehend aufgezeigten Aspekte zum Einsatz kommen:
- Verwendung eines Aktivitätsdetektors (Bewegungsdetektors) der das Aussenden des Signals einstellt, d.h. stoppt, sobald das portable Gerät über längere Zeit nicht bewegt wird und wieder aktiviert, wenn es bewegt wird. Solche Aktivitätsdetektoren sind an sich bekannt und - zu günstigen Preisen - am Markt erhältlich.
- Mindestens teilweise Speisung der Transmitterelektronik und/oder Aufladen der Batterie durch eine Solarzelle und/oder einen Generator, durch welchen mechanische Bewegungsenergie in elektrische Energie gewandelt wird.
- Grosser Elektrodenabstand von mindestens 1 mm, vorzugsweise mindestens 1.5 oder mindestens 2 mm.
- Einrichtung zum Aufwecken der Transmitterelektronik durch ein externes Signal, z.B. einen RFID- oder UFH-Weckpuls. Dieser Weckpuls kann auch codiert sein, um nur berechtigte Transmitter aufzuwecken.

Ausserdem können, ebenfalls in beliebigen Kombinationen mit obigen Aspekten, Vorrichtungen zur Kommunikation des Batteriestands an den Benutzer vorgesehen sein:
- Übermitteln eines Signals betreffend den Batteriestand - bspw. eines bestimmten bits, wenn die Batterie fast leer ist - an den Empfänger, also über die kapazitiv-resisitive Kommunikationsverbindung. Beispielsweise geschieht dies, indem ein dazu vorgesehenes Bit oder eine Bitfolge der übertragenen Daten entsprechend dem Batteriestand gesetzt wird.. Über diesen kann dann - bspw. durch eine Ausgabeeinheit wie ein Display oder ein akustisches Signal - eine Information an den Benutzer und/oder eine andere Einheit (Zentrale etc.) erfolgen.
- Anzeige des Batteriestands über geeignete Displayeinrichtung des portablen Geräts, bspw. mindestens einer LED. Eine solche LED kann blinken, wenn sich die Batterielebensdauer ihrem Ende nähert.
- Vorsehen eines "Low-Comfort-Modes", in welchem die Transmitterelektronik defaultmässig inaktiv ist und aktiv aktiviert werden muss, bspw. durch drücken eines Knopfs. Nach der Aktivierung kann vorgesehen sein, dass die Transmitterelektronik nach einer bestimmten Zeit automatisch zu einem inaktiven Zustand zurückkehrt. Es kann bspw. vorgesehen sein, dass der "Low-Comfort-Mode" erst eingenommen wird, nachdem eine zweite, tiefere Spannungsschwelle unterschritten wird, während bei Unterschreiten einer ersten, höheren Spannungsschwelle nur geeignete Anzeigen (bspw. gemäss mindestens einem der obigen Aspekte) aktiviert werden.

Gemäss jedem der Aspekte der Erfindung ist besonders bevorzugt die Verwendung eines Informationsübertragungsverfahrens, welches auf dem Frequenzspreizverfahren, wobei das Signal als Ultra-Breitband-Signal übertragen wird, bevorzugt gemäss der Lehre der internationalen Patentanmeldung WO 2007/112609. Dadurch wird einerseits der Energieverbrauch niedrig gehalten, andererseits werden die geringen auftretenden Spannungen und Ströme besser akzeptiert. Ultra-Breitband ist definiert als die Nutzung eines Frequenzbereiches einer Bandbreite von mindestens 20% der Mittenfrequenz bzw. Trägerfrequen. Gemäss Lehre dieses Dokuments wird insbesondere ein direkte-Folge-Frequenzspreiz- (direct sequence spread spectrum) -verfahren verwendet. Die Daten werden bevorzugt zuerst mit einem Verfahren der digitalen Datenmodulation moduliert und anschliessend frequenzgespreizt. In der WO 2007/112609 sind auch Verfahren beschrieben, ein kapazitiv-resistives Signal auszuwerten.

Im Folgenden werden Ausführungsformen der Erfindung anhand von schematischen Zeichnungen illustriert. Es zeigen:
- Fig. 1 eine Darstellung eines erfindungsgemässen Transmitters;
- Fig. 2 eine Darstellung eines erfindungsgemässen Transmitters mit eingeschobener SmartCard einer weiteren Applikation;
- Fig. 3 eine Schnittdarstellung eines Transmitters mit SmartCard;
- Fig. 4 ein erfindungsgemäss ausgestaltetes Mobiltelefon;
- Fig. 5 ein Schema zum Mobiltelefon von Fig. 4;
- Fig. 6 ein Schema eines Transmitters mit möglichen Ein- und Ausgabeeinheiten;
- Fig. 7 eine innere Struktur einer Transmitterelektronik;
- Fig. 8 eine Darstellung eines möglichen "End-of-Battery-Life"-Managements in einem Transmitter.

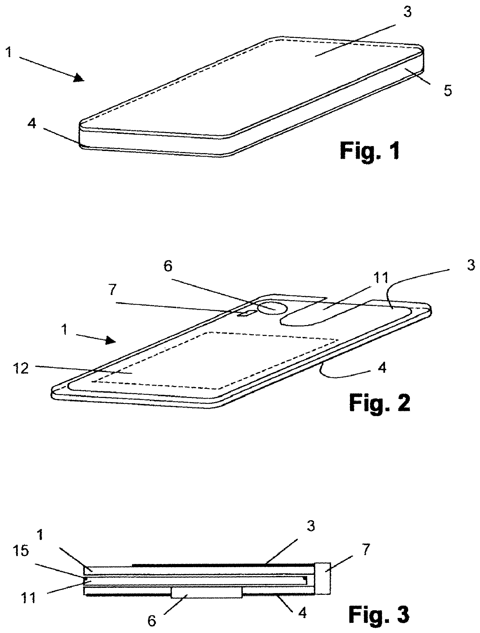

Das portable Gerät 1 gemäss **Figur 1** ist im dargestellten Beispiel im wesentlichen kartenförmig ausgestaltet und weist eine erste Elektrode 3 und eine zweite Elektrode 4 auf. Zwischen der ersten und der zweiten Elektrode befinden sich weitere Elemente, bspw. ein Kunststoffträger 5 mit integrierten und/oder aufgebrachten elektronischen Bauteilen und einem Batteriefach (in der Figur nicht gezeichnet). Die integrierten und/oder aufgebrachten elektronischen Bauteile können bspw. den ASIC zur Ansteuerung der Elektroden, einen EEPROM-Speicher, Leiterbahnstrukturen und/oder weitere Elemente beinhalten. Anstatt aus Kunststoff kann der Träger auch keramisch oder aus einem anderen Material sein, wichtig ist lediglich, dass die beiden Elektroden voneinander elektrisch isoliert sind.

Mindestens eine der Elektroden kann mindestens teilweise transparent sein, im gezeichneten Beispiel die erste Elektrode 3. Auf einer Oberseite des Kunststoffträgers 5 können in an sich bekannter Art Beschriftungen, Bilder etc. aufgebracht sein, die durch die transparente Elektrode hindurch sichtbar sind.

**Figur 2** zeigt ein weiteres Ausführungsbeispiel. Der Transmitter 1 ist als so genannte "Smart Card Cover" ausgebildet. Smart Card Covers sind an sich bekannt. Sie sind als bspw. biegesteife, transparente Hülle ausgebildet, welche bspw. an einem Kleidungsstück befestigt werden kann und in welche eine Smart Card (d.h. ein kartenförmiges Medium mit Speicher- und Kommunikationsfunktionalität) einschiebbar ist.

Der Transmitter weist ein Fach für eine Batterie 6 sowie eine schematisch durch einen Chip 7 repräsentierte Ansteuerelektronik für die mindestens zum Teil transparenten Elektroden 3, 4 auf. Die Smart Card 11 ist in einen Luftspalt einschiebbar. Ein eventuelles Beschriftungsfeld 12 der Smart Card bleibt durch die transparente erste Elektrode 3 hindurch sichtbar.

**Figur 3** zeigt eine Variante der Ausführungsform von Figur 2, in welcher die Smart Card (bzw. andere Bauteile einer von der Transmitterelektronik verschiedenen Applikation) gleichzeitig als RFID-Identifikationsmedium dient. Zusätzlich zu den vorstehend bereits beschriebenen Elementen sieht man schematisch die RFID-Antenne, die hier von einer der Elektroden - im gezeichneten Beispiel von der transparenten Elektrode 3 - nicht vollständig abgedeckt wird. Es hat sich jedoch gezeigt, dass im Falle von transparenten Elektroden - bspw. Elektroden aus ITO - die RFID-Kommunikation auch funktioniert, wenn anders als in der Figur dargestellt beide transparenten Elektroden die RFID-Antenne 15 vollständig abdecken, d.h. wenn die transparente Elektrode 3 die ganze in der Figur obere Fläche bedeckt.

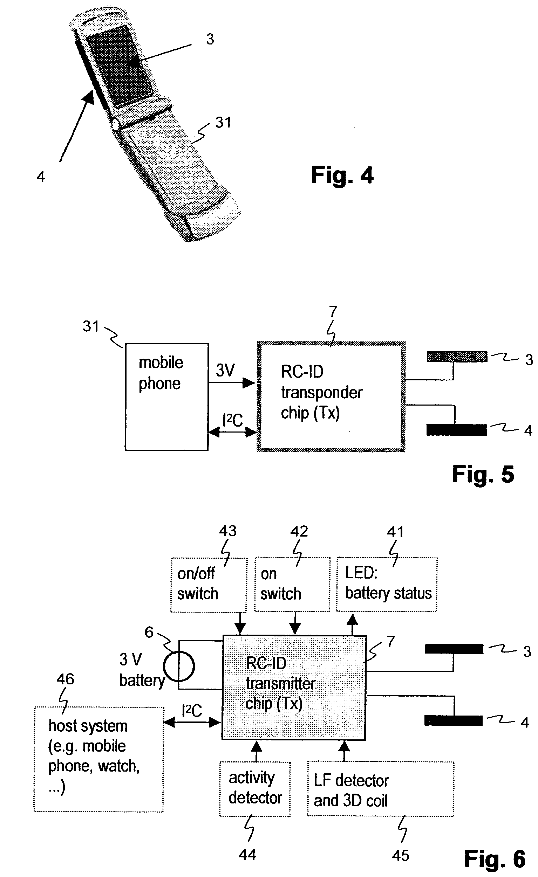

**Figuren 4 und 5** betreffen ein als Mobiltelefon 31 ausgestaltetes erfindungsgemässes portables Gerät. Die erste Elektrode 3 ist in das Display integriert und mindestens im Displaybereich transparent, während die zweite Elektrode 4 wie in den vorstehenden Beispielen von Transmitterelektroden nicht notwendigerweise transparent ist. Die zweite Elektrode befindet sich auf einer Hinterseite des Mobiltelefons (bzw. wie im dargestellten Beispiel von dessen Klappdeckel oder von einem anderen Teil des Mobiltelefons) und kann ggf. auch durch ein leitfähiges Gehäuseteil gebildet sein. Sie ist in möglichst grossen, festen Abstand zur ersten Elektrode angeordnet. In Fig. 5 ist sehr schematisch dargestellt, wie die Transmitterelektronik 7 mit der übrigen Mobiltelefon-Elektronik in Verbindung stehen kann: Das Mobiltelefon speist die Transmitterelektronik (3V), und es besteht eine Kommunikationsverbindung über eine I²C-Schnittstelle.

Durch die Integration der Transmitterelektronik 7 in ein Mobiltelefon und das Vorsehen einer Schnittstelle nach einer bevorzugten Ausführungsform der Erfindung können mehrere Funktionalitäten miteinander in einem portablen Gerät integriert werden. Möglich sind bspw.:
- Dynamische Veränderung des kapazitiv-resistiv übertragenen Datensignales. Das aktuelle Datensignal kann bspw. als PIN-Code verwendet werden, der beliebig oft verändert werden kann.
- Erhöhte Sicherheit kann ermöglicht werden, bspw. durch so genannte "rolling codes" oder andere an sich bekannte Mittel der sicheren Datenübertragung.
- Eine noch weiter erhöhte Sicherheit kann erwirkt werden, indem die UHF-Übertragungsmittel des Mobiltelefons (Bluetooth, 3G etc.) ins Informationsübertragungsprozedere einbezogen werden, bspw. als downlink. Das ermöglicht bspw. die Verwendung des an sich bekannten "Challenge-Response"-Systemes. Auch eine zentrale Einheit kann in die Kommunikation mit einbezogen werden und bspw. Zertifikate vergeben (Cerberus etc.)
- Das Mobiltelefon mit der Transmitterelektronik kann als Programmiergerät verwendet werden. Ein kontinuierlicher Datenstrom kann mit Hilfe der Transmitterelektronik zum Empfänger gesendet werden.
- Künftige Mobiltelefone werden möglicherweise mit NFC, RFID- oder lowpower-wireless (bspw. wie vertrieben unter dem Markennamen wibree™ (www.wibree.com) oder Ultra Low Power Bluetooth oder anderen Identifikationsstandards versehen sein. Durch die Verwendung der kapazitiv-resistiven Informationsübertragung kann eine solche Identifikationstechnologie in einer einzigen Vorrichtung integriert werden, und der Benutzer muss nicht notwendigerweise wissen, welche Technologie aktuell genutzt wird. Besonders interessant ist die Kombination mit dem erfindungsgemässen Ansatz unter anderem darum, weil bspw. die selektive kapazitiv-resistive Informationsübertragung einer möglicherweise kurzreichweitigen (<10m), berührungslosen unselektiven Informationsübertragung nachfolgen und mit dieser zusammenwirken kann.
- Eine Transmitterelektronk für ein Mobiltelefon kann standardmässig ausgestaltet sein und lässt sich ohne Weiteres in bestehende Mobilitelefonarchitekturen einfügen.

Gemäss einem weiteren Aspekt der Erfindung ist die Ansteuerung der Transmitterelektroden mit einer Charge-Recovery und/oder Adiabatic Switching-Logik versehen. Auch sind wie vorstehend beschrieben die Elektroden möglichst weit voneinander entfernt, und die Dielektrizitätskonstante des Mediums/der Medien zwischen den Elektroden ist möglichst klein.

Währenddem gemäss der **Figur 5** die Transmitterelektronik 7 in ein portables Gerät 31 integriert ist, oder zumindest zeitweise mit diesem kommunizieren kann, ist gemäss der **Figur 6** dieselbe Transmitterelektronik 7 für einen "stand-alone" Betrieb mit zusätzlichen Ein/Ausgabeelementen konfiguriert. Die in der Figur 6 gezeigte I²C-Schnittstelle ist bei einem "stand-alone" Betrieb nur zeitweise mit einem Host-System 46 verbunden, beispielsweise um die Transmitterelektronik 7 zu konfigurieren.

Anhand von **Figur 6** werden noch weitere Aspekte beschrieben, die mit einem möglichst kleinen Stromverbrauch und/oder der Überwachung der Batterieladung im Zusammenhang stehen. Die in gepunkteten Kasten dargestellten Komponenten in der Figur sind optional und können einzeln oder in Kombination vorhanden sein.

Die Transmitterelektronik 7 gemäss **Figur 6** ist mit einer Ausgabeeinheit 41 verbunden, über die eine Statusanzeige der Batterieladung ermöglicht wird. Eine solche kann ein Leuchtdiode (LED) oder mehrere Leuchtdioden 41 aufweisen. Weiter kann ein Aktivitätsdetektor 44 vorhanden sein, welcher die Elektrodenansteuerung ausschaltet, wenn das portable Gerät 31 oder ein Träger des Transponderchips 7, beispielsweise ein Schlüssel oder eine Karte, nicht bewegt wird.

Als Alternative oder eventuell in Ergänzung dazu kann auch vorgesehen sein, dass die Transmitterelektronik nur aktiv wird, wenn ein Aufwecksignal, bspw. ein LF-(Low Frequency) Aufwecksignal detektiert wird. Eine entsprechende Detektionseinheit ist mit dem Bezugszeichen 45 versehen. Konfigurationen mit LF-Detektoren für das In-Betrieb-Setzen einer Schaltung sind an sich bereits bekannt.

In der Figur ist noch ein Ein-Schalter 42 dargestellt. Ein solcher kann bspw. zum Einsatz kommen, wenn in einem "Low-Comfort-Mode" bei fast leerer Batterie die Elektronik automatisch ausgeschaltet wurde. Durch Betätigung des Schalters 42 wird die Elektronik für eine begrenzte Zeit wieder aktiviert. Ebenfalls dargestellt ist ein Ein-Aus-Schalter 43, durch welchen das ganze portable Gerät ausgeschaltet werden kann, wenn es nicht gebraucht wird. Im Falle einer Verbindung zu einem "Host-System" (bspw. einem Mobiltelefon 31) 46 ist unter Umständen das Management des Stromverbrauchs etwas weniger wichtig.

Das "Ausschalten der Elektronik" schliesst nicht aus, dass einzelne Komponenten immer noch aktiv sind, bspw. der Zeitgeber. Mit "Ausschalten" ist ausdrücklich der Übergang in einen solchen teilaktiven "Schlaf"-Modus mitgemeint. Insbesondere ist in einem solchen Schlafmodus das Aussenden des Signals über die Elektroden unterbrochen.

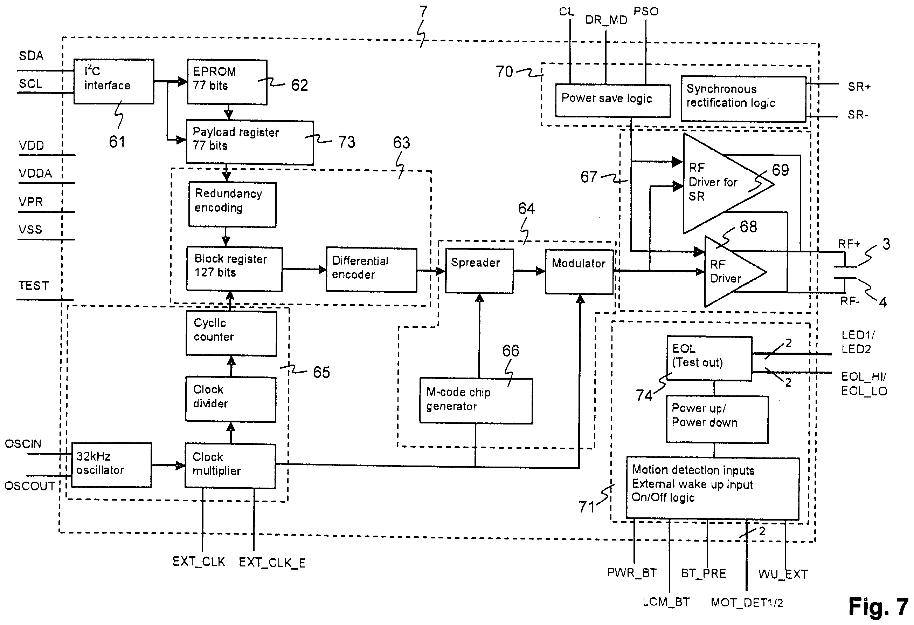

**Figur 7** zeigt die innere Struktur einer Transmitterelektronik 7 respektive eines ASIC in einer bevorzugten Ausführungsform der Erfindung. Der ASIC weist als Hauptelemente eine Kommunikationschnittstelle 61 zu einem I²C-Bus mit Leitungen SDA und SCL auf, einen nichtflüchtigen Speicher 62, einen Codierer 63, einen Modulator 64, und Ausgangstreiber 67. Vorzugsweise weist er zudem Clockschaltkreise 65, eine Steuerlogik 70 für die Ausgangstreiber 67 und eine Stromsparlogik 71 auf. Die Ausgangstreiber 67 weisen vorzugsweise unterschiedliche Ausgangstreiber 68, 69 auf, aus denen ein bestimmter Treiber entsprechend den Eigenschaften der verwendeten Elektroden ausgewählt werden kann. Der Modulator 64 weist einen Chipgenerator 66 auf, typischerweise ein "linear feedback shift register" (LFSR).

Die Funktion der einzelnen Elemente ist die folgende: Über die Kommunikationschnittstelle 61 sind zu übertragende Daten in die Transmitterelektronik 7 einlesbar, und sind Steuer- und Betriebsparameter der Transmitterelektronik 7 einstellbar (beispielsweise die Länge und die Parameter des LFSR). Die zu übertragenden Daten können im nichtflüchtigen Speicher 62 gespeichert werden, so dass die Transmitterelektronik 7 anschliessend von der Schnittstelle abgekoppelt werden und autonom betrieben werden kann. Die zu übertragenden Daten können aber auch in ein Nutzlastregister 73 geschrieben werden und anschliessend durch weitere Daten von der Kommunikationschnittstelle 61 überschrieben werden. Die Daten im Nutzlastregister 73 werden, solange ein Sendebetrieb der Transmitterelektronik 7 aktiv ist, codiert, moduliert und gesendet.

Zur Codierung weist der Codierer 63 in an sich bekannter Weise eine Einheit zum Hinzufügen von redundanten Korrekturbits auf, und beispielsweise einen differentiellen Encoder. Der so erzeugte Code wird durch den Modulator 64 vorzugsweise ultrabreitbandig moduliert. In an sich bekannter Weise geschieht dies beispielsweise mittels einer pseudozufälligen Chip-Sequenz. Jedes Bit des zu übertragenden Codes wird mit im Zeitbereich mit einem aus mehreren Bits bestehenden Chip multipliziert oder XOR-verknüpft, wodurch sich das breitbandmodulierte Signal ergibt.

Im Modulator 64 oder anschliessend an diesen kann noch ein Element vorhanden sein, mit dem die Bandbreite variiert werden kann. Dieses kann bspw. als Frequenzteiler (z.B. Flip-Flop) ausgebildet sein, der je nach Vorgabe die Signalübertragung mit voller Bandbreite oder mit reduzierter Bandbreite bewirkt, bspw. mit der halben Bandbreite.

In einer bevorzugten Ausführungsform der Erfindung ist die Transmitterelektronik 7 derart ausgebildet, dass die Länge der Chip-Sequenz vorgebbar oder wählbar ist, beispielsweise durch Übergabe entsprechender Parameter über die Schnittstelle 61. Damit ist es möglich die an sich gegensätzlichen Anforderungen bezüglich Kommunikationssicherheit und -Geschwindigkeit entsprechend der Anwendung der 7 einzustellen.

Ebenfalls ist möglich, durch Veränderungen einer Einstellung des Clock Multipliers die Mittenfrequenz (Carrierfrequenz) der Übertragung festzulegen - quasi durch eine Skalierung aller Frequenzen. So kann auch in Gegenwart von Störungen die Robustheit der Datenübertragung optimiert werden. Es kann beispielsweise vorgesehen sein, dass ein durch einen Schalter oder eine Mehrzahl von Schaltern die Mittenfrequenz zwischen diskreten Werten oder quasi-kontinuierlich geschaltet werden kann, oder dass ggf. über die Schnittstelle eine Vorgabe für die Mittenfrequenz als numerischen Wert gemacht werden und in einen entsprechenden Speicher abgelegt werden kann. Die Schaltzustände der Schalter können ggf. ebenfalls via die Schnittstelle definiert sein, oder sie können, insbesondere wenn keine Schnittstelle vorhanden ist, - bspw. in der Art von DIP-Schaltern - für einen Benutzer extern zugänglich sein, oder sie können bereits bei der Produktion des portablen Geräts bestimmt werden.

Besonders günstig ist eine Kombination der Möglichkeiten, die Mittenfrequenz zwischen mindestens zwei Werten oder kontinuierlich zu varriieren und der Möglichkeit, die Bandbreite ebenfalls zwischen mindestens zwei Werten oder kontinuierlich zu variieren. Dadurch kann besonders effektiv auf das Vorhandensein eventueller Störsignale eingegangen werden.

Die Steuerlogik 70 für die Ausgangstreiber 67 bestimmt die zu verwendenden Ausgangstreiber 68, 69 beispielsweise in folgender Weise: mit einem Steuersignal CL ist die Grössenordnung der kapazitiven Last der Elektroden 3, 4 wählbar. Mit einem Steuersignal DR_MD ist wählbar, ob die Elektroden differenziell oder singleended angesteuert werden. Mit einem Steuersignal PSO ist wählbar, ob die Elektroden mittels "synchronous rectification" angesteuert werden (wobei eine externe Beschaltung mittels einer oder zweier Induktivitäten erforderlich ist). Durch diese Steuersignale können die Ausgangstreiber 67 und ihre Betriebsart an die verwendeten Elektroden 3, 4 angepasst werden, so dass ihr Energiebedarf möglichst klein bleibt.

Die Stromsparlogik 71 weist unter anderem die Detektion des Batteriezustands 74 und vorzugsweise die folgenden Eingänge auf
▪ PWR_BT und BT_PRE zum Einschalten und Ausschalten verschiedener Stufen eines stromsparenden Betriebs;
▪ LCM_BT zum Aktivieren des Aussendens von Signalen über die Elektroden 3, 4 (beispielsweise während einer vorgegebenen Zeit) wenn sich die Transmitterelektronik 7 im "low-comfort mode" befindet;
▪ MOT_DET1/2 für mindestens einen Bewegungsdetektor oder Aktivitätsdetektor (44); und
▪ WU EXT für ein externes, insbesondere drahtlos empfangenes Aufwachsignal ("Wake-Up"), beispielsweise von einem 125 kHz Empfänger. Damit kann erreicht werden, dass die Transmitterelektronik 7 nur in der Nähe eines Empfängers aktiviert wird. Dazu ist der Empfänger, der beispielsweise ortsfest ist oder in einem Auto eingebaut ist, mit einem entsprechenden 125 kHz Sender zum Aussenden eines Wake-Up-Signals ausgerüstet.

Ausgangssignale LED1, LED2 steuern LEDs zur Anzeige des Batteriestatus an. Ausgangssignale EOL_HI, EOL_LO zeigen ebenfalls den Batterielevel an und können durch beispielsweise das portable Gerät 31 abgefragt und verarbeitet werden.

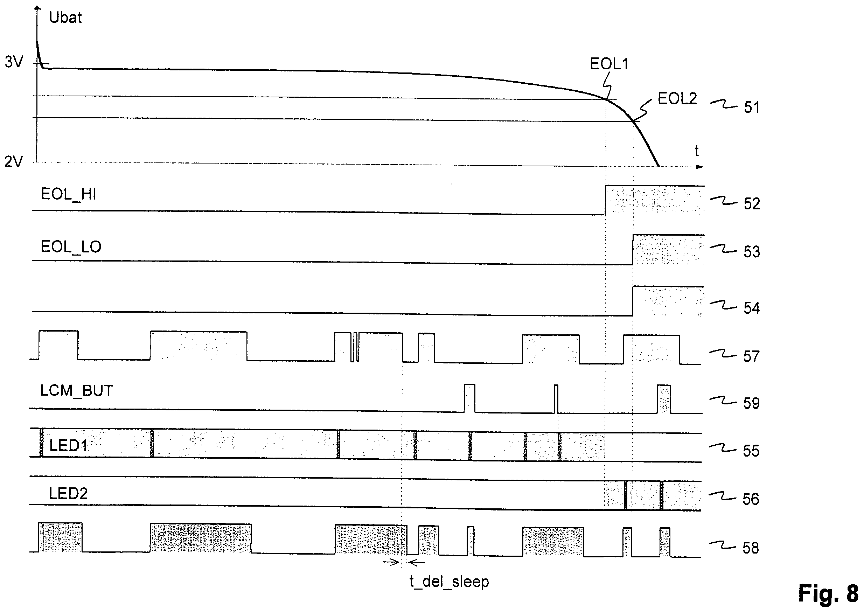

In **Figur 8** schliesslich ist noch eine mögliche Ausführungsform eines "End-of-Battery-Life"-Verhaltens aufgezeigt. In der Figur sieht man eine typische Entladungskurve 51 einer Lithium-Ionen-Batterie und in Bezug darauf
- den Bereich für den Normalbetrieb und mit Anzeige des Normal-Ladungszustandes, in welchem, bis zum Unterschreiten einer ersten Spannungsschwelle EOL1, das erste "End-of-Life"-Signal EOL_HI (Zeile Nr. 52) tief ist, und
- den gesamten Bereich für den Normalbetrieb, in welchem, bis zum Unterschreiten einer zweiten Spannungsschwelle EOL2, das zweite "End-of-Life"-Signal EOL_LO (Nr. 53) tief ist.

In Zeilen 55 und 56 findet sich eine entsprechende Darstellung der Leuchtmoden: währenddem EOL_HI tief ist, leuchtet eine erste LED oder blinkt mit einem bestimmten Muster, nachdem EO1 unterschritten ist, blinkt die zweite LED mit einem bestimmten Muster.

Zeile 54 zeigt die Aktivierung des "Low-Comfort-Mode-Bereichs" 54, in welchem das portable Gerät nur bei aktiver Betätigung, also durch Drücken einer Taste, sendet (d.h. man muss es aus der Tasche nehmen).

Weiter ist dargestellt (Zeile 58), in welchen Zeiträumen die Elektroden aktiv sind, also senden. Dies ist im Normalbetrieb der Fall, wenn ein Aktivitätssensor eine Bewegung des portablen Geräts registriert, oder wenn ein Aufwachsignal empfangen wird (Nr. 57). Wenn die Bewegung aufhört, bleiben die Elektroden vorzugsweise noch während einer Zeitdauer t_del_sleep aktiv. Im "Low-Comfort-Mode" sind die Elektroden nur aktiv, wenn die entsprechende Taste betätigt wird (Nr. 59). Beim letzten Peak ganz rechts auf Zeile 58 wird also davon ausgegangen, dass eine aktive Aktivierung durch den Benutzer entsprechend Zeile 59 erfolgt ist.

## Patentansprüche

1. Portables Gerät (1, 31) für die Übertragung von Signalen zur Datenübertragung an ein zweites Gerät, wobei das portable Gerät (31) durch einen Benutzer tragbar ist, aufweisend mindestens zwei Elektroden (3, 4) und Mittel zum Anlegen eines elektrischen Signals zwischen den Elektroden (3, 4), so dass das Signal durch die Elektroden (3, 4) in den Körper des Benutzers einkoppelbar und vom Körper durch mindestens eine Elektrode des zweiten Geräts detektierbar ist, **dadurch gekennzeichnet, dass**
die genannten Mittel (67) zum Anlegen des elektrischen Signals zwischen den Elektroden (3, 4) Teil einer Transmitterelektronik (7) sind,
die Transmitterelektronik (7) zudem Mittel (63, 64) zum Erzeugen des elektrischen Signals in Abhängigkeit von vorgegebenen Daten aufweist,
und die Transmitterelektronik (7) als anwendungsspezifischer Integrierter Schaltkreis (ASIC) ausgeführt ist.
**dadurch gekennzeichnet, dass** eine Kommunikationsverbindung zwischen der Transmitterelektronik (7) und einer Eingabeeinheit des portablen Gerätes (1; 31) besteht, wobei von der Transmitterlelektronik (7) übermittelte Signale von eingegebenen Daten abhängig sind, und das portable Gerät (1, 31) als Mobiltelefon ausgebildet ist, und die Eingabeeinheit des portablen Gerätes (1; 31) der Eingabeeinheit des Mobiltelefons entspricht.

2. Portables Gerät (1, 31) nach Anspruch 1, in welchem die Transmitterelektronik (7) einen Codierer (63) zum Codieren von zu übertragenden Daten und damit zur Erzeugung von codierten Daten, einen Modulator (64) zum Modulieren der codierten Daten und damit zur Erzeugung eines modulierten Signals, und einen Treiber (67) zum Verstärken des modulierten Signals und zum Ansteuern der Elektroden (3, 4) aufweist.

3. Portables Gerät (1, 31) nach einem der Ansprüche 1 oder 2, wobei eine Kommunikationsverbindung zwischen der Transmitterelektronik (7) und einer Eingabeeinheit besteht oder herstellbar ist, insbesondere eine I²C-Schnittstelle (61), und die Transmitterelektronik (7) so ausgelegt und/oder programmiert ist, dass das elektrische Signal von über die Eingabeeinheit eingegebenen Daten abhängig ist.

4. Portables Gerät (1, 31) nach einem der vorangehenden Ansprüche, wobei die Transmitterlektronik einen beispielsweise nichtflüchtigen Datenspeicher aufweist.

5. Portables Gerät (1, 31) nach einem der vorangehenden Ansprüche, wobei zwischen den Elektroden Bauteile einer von der Transmitterelektronik (7) verschiedenen Applikation angeordnet sind.

6. Verwendung eines portablen Geräts (1, 31) nach einem der Ansprüche 1 bis 5 für die Zugangskontrolle.

## Claims

1. A portable apparatus (1, 31) for the transmission of signals for data transmission to a second apparatus, wherein the portable apparatus (31) is portable by a user, including at least two electrodes (3, 4) and means for applying an electrical signal between the electrodes (3, 4) such that by means of the electrodes the signal may be coupled into the body of the user, and are detectable from the body by means of at least one electrode of the second apparatus, **characterized in that**
the mentioned means (67) for applying the electric signal between the electrodes (3, 4) are part of transmitter electronics (7),
moreover, the transmitter electronics (7) includes means (63, 64) for producing the electrical signal depending on specified data,
and the transmitter electronics (7) is configured as an application specified integrated circuit (ASIC),
**characterized in that** a communications connection between the transmitter electronics (7) and an input unit of the portable apparatus (1; 31) is present, wherein signals transmitted by the transmitter electronics (7) are dependent from input data, and the portable apparatus (1, 31) is configured as a mobile phone, and the input unit of the portable apparatus (1; 31) corresponds to the input unit of the mobile phone.

2. The portable apparatus (1, 31) according to claim 1, in which the transmitter electronics (7) includes an encoder (63) for encoding data to be transferred and thereby for generating encoded data, a modulator (64) for modulating the encoded data and thereby for generating a modulated signal, and a driver (67) for amplifying the modulated signal and for controlling the electrodes (3, 4).

3. The portable apparatus (1, 31) according to any of the claims 1 or 2, wherein a communications connection exists or may be established between the transmitter electronics (7) and an input unit, in particular an I²C interface (61), and the transmitter electronics (7) is designed and/or programmed such that the electric signal depends on data input via the input unit.

4. The portable apparatus (1, 31) according to any of the preceding claims, wherein the transmitter electronics includes for example a non-volatile data memory.

5. The portable apparatus (1, 31) according to any of the preceding claims, wherein components of an application different from the transmitter electronics are disposed between the electrodes.

6. A utilization of a portable apparatus (1, 31) according to any of the claims 1 to 5 for the access control.

## Revendications

1. Appareil portable (1, 31) pour la transmission de signaux pour la transmission de données à un deuxième appareil, dans lequel un utilisateur peut porter l'appareil portable (31), comprenant au moins deux électrodes (3, 4) et des moyens pour appliquer un signal électrique entre les électrodes (3, 4) de façon à coupler le signal par l'intermédiaire des électrodes (3, 4) dans le corps de l'utilisateur, et étant détectable depuis le corps par au moins une électrode du deuxième appareil, **caractérisé en ce que**
les moyens mentionnés (67) pour appliquer le signal électrique entre les électrodes (3, 4) font partie d'un système électronique à transmetteurs (7),
le système électronique à transmetteurs (7) par ailleurs présente des moyens (63, 64) pour générer le signal électrique en fonction de données spécifiées, et le système électronique à transmetteurs (7) est aménagé comme circuit intégré propre à une application (ASIC),
**caractérisé en ce qu'**une connexion de communication existe entre le système électronique à transmetteurs (7) et une unité d'entrée de l'appareil portable (1; 31), des signaux transmis par le système électronique à transmetteur (7) dépendant de données entrées, et l'appareil portable (1, 31) est aménagé comme téléphone portable, et l'unité d'entrée de l'appareil portable (1; 31) correspond à l'unité d'entrée du téléphone portable.

2. Appareil portable (1, 31) selon la revendication 1, dans lequel le système électronique à transmetteurs (7) présente un codeur (63) pour coder des données à transmettre et par-là pour la génération de données codées, un modulateur (64) pour moduler les données codées et par-là pour la génération d'un signal modulé, et un pilote informatique (67) pour amplifier le signal modulé et pour activer les électrodes (3, 4).

3. Appareil portable (1, 31) selon l'une des revendications 1 ou 2, dans lequel une connexion de communication existe ou peut-être établie entre le système électronique à transmetteurs (7) et une unité d'entrée, tout particulièrement une interface I²C (61), et le système électronique à transmetteurs (7) est spécifié et/ou programmé de façon à ce que le signal électrique est dépendant de données entrées par l'intermédiaire de l'unité d'entrée.

4. Appareil portable (1, 31) selon l'une des revendications précédentes, dans lequel le système électronique à transmetteurs présente par exemple une mémoire à données non-volatile.

5. Appareil portable (1, 31) selon l'une des revendications précédentes, dans lequel des composants d'une application différente du système électronique à transmetteurs (7) sont agencés entre les électrodes.

6. Utilisation d'un appareil portable (1, 31) selon l'une des revendications 1 à 5 pour un contrôle d'accès.
